# EUROPÄISCHE PATENTSCHRIFT

(11) **EP 1 219 483 B1**
(45) Veröffentlichungstag und Bekanntmachung des Hinweises auf die Patenterteilung: **14.02.2007**
(21) Anmeldenummer: 01128935.2
(22) Anmeldetag: 05.12.2001
(51) Int. Cl.: B60J 5/04, B60J 1/17

(54) **Schachtleiste für eine Fahrzeugtüre**
Window molding for a vehicle door
Encadrement pour une porte de véhicule

(30) Priorität: 07.12.2000 DE 10060945
(43) Veröffentlichungstag der Anmeldung: 03.07.2002
(73) Patentinhaber: DURA Automotive Plettenberg Entwicklungs- und Vertriebs GmbH, 58840 Plettenberg (DE)
(72) Erfinder: Schulte, Martin, 58802 Balve (DE)
(74) Vertreter: Zinnecker, Armin

(56) Entgegenhaltungen:
- EP-A- 0 997 331
- WO-A-99/33679
- DE-A- 19 713 435
- DE-A- 19 962 988

## Beschreibung

Die Erfindung betrifft eine Schachtleiste zur Aufnahme der Scheibe einer Fahrzeugtüre sowie eine Fahrzeugtüre, die eine derartige Schachtleiste aufweist.

Fahrzeugtüren, insbesondere Türen von Kraftfahrzeugen, sind üblicherweise mit einer Schachtleiste versehen. Eine vorbekannte Schachtleiste ist in Fig. 3 dargestellt. Nach der vorbekannten Lösung sind zwei Schachtleisten vorhanden, nämlich eine innere Schachtleiste 1 und eine äußere Schachtleiste 2, die im wesentlichen parallel zueinander und im Abstand voneinander verlaufen. Die Schachtleisten 1, 2 liegen mit ihren Enden an im wesentlichen rechteckigen Aufnahmen 3 der Fahrzeugtüre 4 an. Die Kontur der angrenzenden Karosserieteile 5 ist im wesentlichen komplementär hierzu geformt. Der Raum 6 zwischen den Schachtleisten 1 und 2 dient zur Aufnahme der Scheibe (des Fallfensters) der Fahrzeugtüre. Die Außenseite der äußeren Schachtleiste 2 ist mit einer Fahrzeugbeplankung 7 verbunden.

Eine solche Fahrzeugtüre und Schachtleiste ist zum Beispiel aus der DE-A-199 62 988, gemäß welcher auch der Oberbegriff des Anspruchs 1 abgegrenzt wurde, bekannt.

Aufgabe der Erfindung ist es, eine Schachtleiste dieser Art zu verbessern.

Erfindungsgemäß wird diese Aufgabe durch die kennzeichnenden Merkmale des Anspruchs 1 gelöst.

Vorteilhaft ist es wenn die Schachtleiste aus einem Strangpressprofil hergestellt ist.

Weitere vorteilhafte Weiterbildungen sind Gegenstand der weiteren Unteransprüche.

Vorzugsweise ist in der Schachtleiste eine Einfräsung für die Scheibe vorgesehen.

Eine weitere vorteilhafte Weiterbildung ist dadurch gekennzeichnet, daß im inneren Teil der Schachtleiste eine oder mehrere Längsnuten oder partielle Längsnuten vorgesehen sind.

Die Erfindung betrifft ferner eine Fahrzeugtüre, insbesondere eine Kraftfahrzeugtüre, die durch eine erfindungsgemäße Schachtleiste gekennzeichnet ist.

Ein Ausführungsbeispiel der Erfindung wird nachstehend anhand der beigefügten Zeichnung im einzelnen erläutert. In der Zeichnung zeigt
- Fig. 1: eine Fahrzeugtüre in einer Seitenansicht,
- Fig. 2: einen Schnitt längs der Linie A-A in Fig. 1,
- Fig. 3: eine vorbekannte Fahrzeugtüre in einer der Fig. 2 entsprechenden Schnittdarstellung,

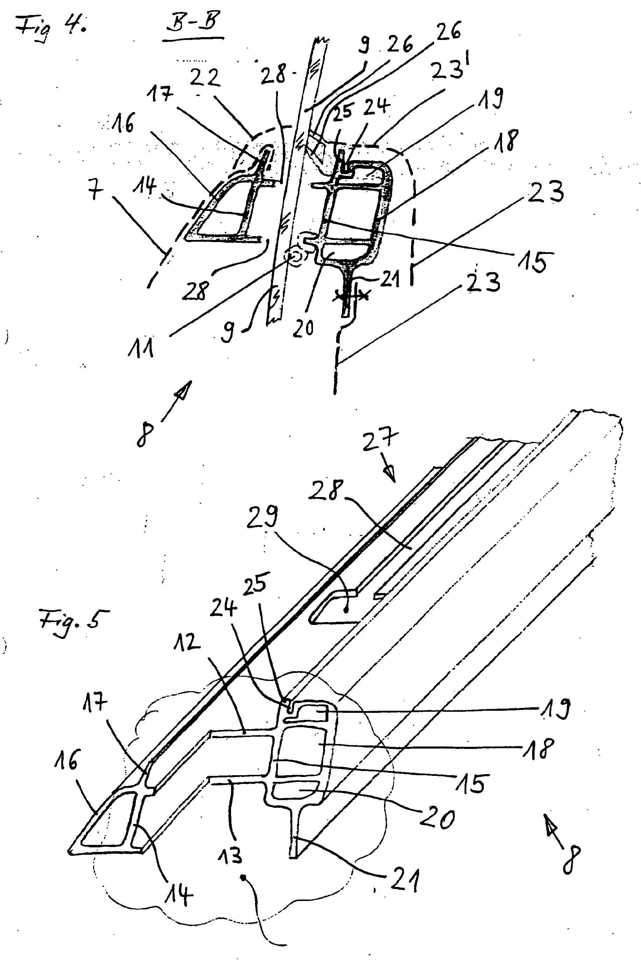

- Fig. 4: einen Schnitt längs der Linie B-B in Fig. 1 und
- Fig. 5: eine perspektivische Ansicht der in den Figuren 1, 2 und 4 gezeigten Schachtleiste, teilweise im Schnitt.

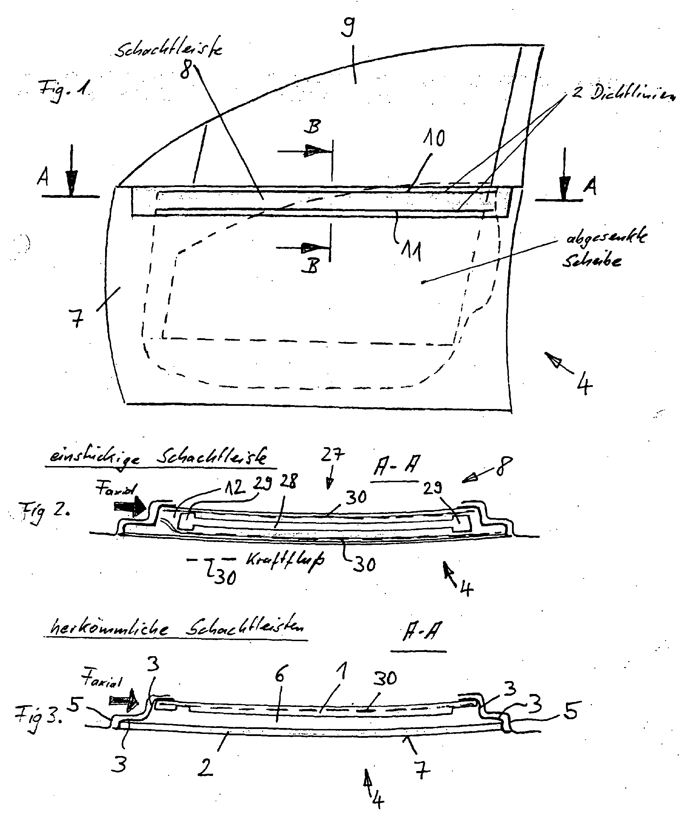

Die in Fig. 1 gezeigte Fahrzeugtüre (Kraftfahrzeugtüre) 4 besteht aus einer Schachtleiste 8, einer Beplankung 7, einer Scheibe 9 und aus weiteren Bestandteilen. Die Position der Scheibe (des Fallfensters) 9 in abgesenktem Zustand ist in Fig. 1 gestrichelt gezeichnet. An der Schachtleiste 8 sind zwei parallele, beabstandete Dichtlinien 10, 11 vorhanden.

Die Schachtleiste 8 ist als einstückige Profilkonstruktion ausgestaltet. Sie ist aus einem Strangpressprofil hergestellt. Das Strangprofil besteht aus einem oberen waagrechten Teil 12 und einem dazu im wesentlichen parallelen, beabstandeten, unteren waagrechten Teil 13 sowie einem äußeren senkrechten Teil 14 und einem dazu parallelen, beabstandeten, inneren senkrechten Teil 15. Die Teile 12, 13, 14, 15 bilden im wesentlichen ein Kastenprofil.

An den äußeren senkrechten Teil 14 schließt sich nach außen ein geschlossener Profilteil 16 an. Der äußere senkrechte Teil 14 ist nach oben durch einen nach oben weisenden, senkrechten Flansch 17 verlängert. Die Teile 14, 16 und 17 bilden die äußere Schachtleiste.

An den inneren senkrechten Teil 15 schließt sich nach innen ein weiteres Kastenprofil 18 an, das nach oben und unten durch ein weiteres oberes geschlossenes Profil 19 und ein weiteres unteres geschlossenes Profil 20 ergänzt wird. Von der unteren Mitte des weiteren unteren geschlossenen Profils 20 erstreckt sich ein senkrechter Flansch 21 nach unten. Die Teile 15, 18, 19, 20 und 21 bilden die innere Schachtleise.

An der Außenseite des geschlossenen Profilteils 16 liegt die Außenbeplankung 7 an, die sich über die Spitze des Flansches 17 hinweg erstreckt und diese Spitze des Flansches 17 in einem Winkel von etwa 180° einschließt. Das obere, sich über den Flansch 17 hinweg erstreckende Ende der Außenbeplankung 7 wird durch den Brüstungsstab 22 abgedeckt.

An dem nach unten weisenden, senkrechten Flansch 21 ist ein Montageblech 23 befestigt. An der Außenseite des weiteren Kastenprofils 18 und des weiteren oberen geschlossenen Profils 19 liegt eine Innenverkleidung 23' an, die durch eine Längsnut 24 in der inneren Schachtleiste mit dieser verbunden werden kann. Außerhalb der Längsnut 24 ist ein nach oben weisender, im wesentlichen vertikaler Flansch 25 vorgesehen, der von der Innenverkleidung 23' ebenfalls übergriffen wird. Am äußeren Ende ist die Innenverkleidung 23' mit zwei Dichtlippen 26 versehen, die an der Scheibe 9 anliegen und durch die die obere Dichtlinie 10 gebildet wird. Die untere Dichtlinie 11 befindet sich im Bereich des Zusammentreffens des unteren waagrechten Teils 13 und des inneren senkrechten Teils 15 des Profils. Die untere Dichtlinie 11 liegt ebenfalls an der Scheibe 9 an.

Im oberen waagrechten Teil 12 und im unteren waagrechten Teil 13 der Schachtleiste 8 ist eine in Längsrichtung der Schachtleiste 8 verlaufende Ausfräsung 27 vorgesehen, deren Mittelteil 28 die Scheibe 9 aufnimmt und deren in den Ausmaßen größere, im wesentlichen rechteckige Endteile 29 zur Aufnahme von Führungsschienen für die Scheibe 9 dienen.

Das weitere obere geschlossene Profil 19 bildet einen Hohlraum zur Luftführung.

Durch die Wahl eines Strangpressprofils für die Schachtleiste hat man die Möglichkeit, die erforderliche Knick- und Biegesteifigkeit für die Schachtverstärkung innen optimal auszulegen (z.B. durch Querstege im Profil). Auch bei der Schachtverstärkung außen ist eine große konstruktive Freiheit gegeben. Die optimierten Strangpressprofile sind zu einem einzigen Profil, also zu einer einstückigen Profilkonstruktion, zusammengefügt, die im oberen und unteren Bereich, also im oberen waagrechten Teil 12 und im unteren waagrechten Teil 13, analog zur Wölbung der Scheibe 9 befräst wird, um den erforderlichen Schacht für die Scheibe zu bilden.

Die Schachtverstärkungen können partiell verprägt oder freigemacht werden, um den notwendigen Bauraum zu schaffen. Wenn die Schachtleiste als einstückige Profilkonstruktion ausgebildet ist, wird der Kraftfluß bei einem in axialer Richtung verlaufenden Unfall (Axialcrash) deutlich verbessert, da sich dann die Kraft Fₐₓᵢₐₗ (Fig. 2) auf die gesamte Schachtleiste 8 verteilt, also sowohl von der inneren Schachtleiste 15, 18, 19, 20, 21 als auch von der äußeren Schachtleiste 14, 16, 17 aufgenommen wird und auch noch zusätzlich von dem oberen und unteren waagrechten Teil 12 und 13. Die Kraftflußlinien sind mit der Ziffer 30 versehen.

Die einstückige Ausgestaltung der Profilkonstruktion wirkt sich auch bei einem von der Seite her wirkenden Unfall (Seitencrash) günstig aus. Hierdurch kann das Gewicht der Schachtleiste reduziert werden.

Durch die Erfindung kann der Schacht auch sehr genau hergestellt werden. Dies wirkt sich vorteilhaft auf die Schachtdichtungen 10, 11, 26 zur Scheibe 9 aus, da sie nicht so große Toleranzen aufnehmen müssen. Hierdurch ergeben sich erhebliche Vorteile bei der Akustik.

Durch die einstückige Profilkonstruktion hat man ferner die Möglichkeit, eine zweite Dichtlinie 11 zur Scheibe 9 einzubringen, wodurch die Geräuschbildung aus dem Resonanzraumtürkasten minimiert wird. Ferner wird bei abgesenkter Scheibe 9 eine bessere Führung der Scheibenoberkante gewährleistet. Bei abgesenkter Scheibe 9 wird die Scheibe nämlich aufgrund ihrer gekrümmten Oberkante in der aus Figur 1 ersichtlichen Weise nur noch teilweise geführt. Durch die bessere Führung der Scheibenoberkante wird die Gefahr vermindert, daß die Scheibe 9 bei kritischen Schwingungen zu "rappeln" beginnt.

Durch partielle Längsnuten in der inneren Schachtleiste, beispielsweise durch die Längsnut, die durch den Hohlraum in dem weiteren oberen geschlossenen Profil 19 gebildet wird, kann die Scheibe 9 zusätzlich belüftet werden. Dies ist für die Insassen des Fahrzeugs angenehmer als eine Belüftung durch die seitlichen Luftdüsen im Cockpit, welche in der Regel eine sehr hohe Strömungsgeschwindigkeit haben.

Die einstückige Schachtverstärkung kann entsprechend dem Stakverlauf gebogen sein, oder sie kann gerade augebildet sein (dies ist optimal im Falle eines Unfalls (Crash)), wobei die Anbindung an die Außenbeplankung nachträglich angearbeitet werden kann.

Durch die Erfindung werden folgende Funktionen erfüllt: Bei einem Frontalunfall (Frontalcrash): Abstützung der Fahrgastzelle durch Übertragung der Kräfte in die hintere Tür bzw. in die Karosserie. Bei einem Seitenunfall (Seitencrash): Beitrag zur Reduzierung der Eindringgeschwindigkeit durch eine ausreichend steife Struktur. Fensterführung: Durchgang und Abdichtung der Scheibe (des Fallfensters) werden gewährleistet durch die Aufnahme der Schachtleisten. Akustik: Vermeidung von Geräuschbildung aus dem Resonanzraum des Türkastens in den Fahrzeuginnenraum. Diebstahlsicherung: Durch Befestigung der Fahrzeugbeplankung an der äußeren Schachtleiste wird sichergestellt, daß von außen kein Eindringen in den Türkasten möglich ist. Anbindungspunkte: Die Schachtleisten können diverse Anbindungspunkte für verschiedenen Bauteile zur Verfügung stellen, beispielsweise für Fensterheber, Montageplatten, Innenverkleidung, Führungsschienen, Kabelbäume und Ähnliches.

Neben diesen Funktionen kann ein Hohlraum der Profile zusätzlich zur Luftführung und somit zur Scheibenbelüftung verwendet werden. Gemäß der Erfindung können alle genannten Funktionen optimal in einem Bauteil integriert werden.

Folgende Vorteile sind erreichbar: ein besserer Kraftfluß bei einem Unfall (Crash), enge Toleranzen im Fensterschacht, eine kostengünstige Herstellung durch weniger Fertigungsoperationen, eine Gewichtsreduzierung, eine zusätzliche tiefer gelegene Schachtabdichtung ist möglich (günstig für die Akustik; gegen ein Scheibenrattern), eine zusätzliche Belüftung der Seitenscheibe ist möglich, Anbindungspunkte für angrenzende Bauteile können realisiert werden, es werden weniger Einzelteile benötigt.

## Patentansprüche

1. Schachtleiste (8) zur Aufnahme der Scheibe (9) einer Fahrzeugtüre (4), wobei die Schachtleiste (8) eine innere Schachtleiste (15,18,19,20,21) und eine äußere Schachtleiste (14,16,17) umfaßt,
**dadurch gekennzeichnet,**
**daß** die die innere und die äußere Schachtleiste umfaßende Schachtleiste (8) eine einstückige, die Scheibe (9) aufnehmende und einen Schacht für die Scheibe (9) bildende Profilkonstruktion aufweist.

2. Schachtleiste (8) nach Anspruch 1,
**dadurch gekennzeichnet,**
**daß** die Schachtleiste (8) aus einem Strangpressprofil hergestellt ist.

3. Schachtleiste (8) nach einem der vorhergehenden Ansprüche, **gekennzeichnet durch** eine Einfräsung (27) für die Scheibe (9).

4. Schachtleiste (8) nach einem der vorhergehenden Ansprüche, **dadurch gekennzeichnet, daß** im inneren Teil der Schachtleiste (8) eine oder mehrere Längsnuten (19) oder partielle Längsnuten vorgesehen sind.

5. Fahrzeugtüre (4), **gekennzeichnet durch** eine Schachtleiste (8) nach einem der Ansprüche 1 bis 4.

## Claims

1. Channel strip (8) for holding the window pane (9) of a vehicle door (4), the channel strip (8) comprising an inner channel strip (15, 18, 19, 20, 21) and an outer channel strip (14, 16, 17),
**characterized**
**in that** the channel strip (8) which comprises the inner channel strip and the outer channel strip has a single-piece profiled-section structure which holds the window pane (9) and forms a channel for the window pane (9).

2. Channel strip (8) according to Claim 1,
**characterized**
**in that** the channel strip (8) is produced from an extruded profiled section.

3. Channel strip (8) according to one of the preceding claims, **characterized by** a milled-out portion (27) for the window pane (9).

4. Channel strip (8) according to one of the preceding claims, **characterized in that** one or more longitudinal grooves (19) or partial longitudinal grooves are provided in the inner part of the channel strip (8).

5. Vehicle door (4), **characterized by** a channel strip (8) according to one of Claims 1 to 4.

## Revendications

1. Encadrement (8) pour le logement de la vitre (9) d'une porte de véhicule (4), l'encadrement (8) comprenant un encadrement intérieur (15, 18, 19, 20, 21) et un encadrement extérieur (14, 16, 17), **caractérisé en ce que**
l'encadrement (8) comprenant l'encadrement intérieur et l'encadrement extérieur présente une construction profilée d'une seule pièce, recevant la vitre (9) et un puits pour la vitre (9).

2. Encadrement (8) selon la revendication 1, **caractérisé en ce que**
l'encadrement (8) est fabriqué à partir d'un profilé extrudé.

3. Encadrement (8) selon l'une quelconque des revendications précédentes, **caractérisé par** un fraisage intérieur (27) pour la vitre (9).

4. Encadrement (8) selon l'une quelconque des revendications précédentes, **caractérisé en ce que** une ou plusieurs rainures longitudinales (19) ou des rainures longitudinales partielles sont prévues dans la partie intérieure de l'encadrement (8).

5. Porte de véhicule (4), **caractérisée par** un encadrement (8) selon l'une quelconque des revendications 1 à 4.
